## Europäisches Patentamt
## European Patent Office
## Office européen des brevets

(19)

(11) Veröffentlichungsnummer: **0 022 181**
**B1**

(12) **EUROPÄISCHE PATENTSCHRIFT**

(45) Veröffentlichungstag der Patentschrift:
**12.10.83**

(51) Int. Cl.³: **C 01 B 17/88**

(21) Anmeldenummer: **80103187.3**

(22) Anmeldetag: **09.06.80**

(54) **Verfahren und Vorrichtung zum Regenerieren von Schwefelsäure.**

(30) Priorität: **16.05.80 DE 3018665**
**13.06.79 CH 5513/79**

(43) Veröffentlichungstag der Anmeldung:
**14.01.81 Patentblatt 81/2**

(45) Bekanntmachung des Hinweises auf die Patenterteilung:
**12.10.83 Patentblatt 83/41**

(84) Benannte Vertragsstaaten:
**BE CH DE FR GB IT LI NL SE**

(56) Entgegenhaltungen:
**DE-A-2 242 055**
**DE-B-1 074 019**
**FR-A-1 241 856**

(73) Patentinhaber: **BAYER AG, Zentralbereich Patente, Marken und Lizenzen, D-5090 Leverkusen 1, Bayerwerk (DE)**
Patentinhaber: **BERTRAMS AKTIENGESELLSCHAFT, Eptingerstrasse 41, CH-4132 Muttenz 1 (CH)**

(72) Erfinder: **Forter, Hansruedi, Schlossweg 3, CH-4466 Ormalingen (CH)**
Erfinder: **Groening, Jürgen, Dipl.-Ing., Braschosserstrasse 68, D-5200 Siegburg (DE)**
Erfinder: **Kühnlein, Hans L., Hümpeliweg 20, CH-4414 Füllinsdorf (CH)**
Erfinder: **Küng, Hans Rudolf, Gassackerweg 37, CH-4702 Frenkendorf (CH)**
Erfinder: **Maas, Joachim, Dr., Otto-Hahn-Strasse 25, D-5010 Bergheim (DE)**
Erfinder: **Schultz, Karl-Heinz, Dr., Deswatinesstrasse 61, D-4150 Krefeld (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Verfahren und Vorrichtung zum Regenerieren von Schwefelsäure

Gegenstand der vorliegenden Erfindung ist ein Verfahren und eine Vorrichtung zum Regenerieren von verunreinigter Schwefelsäure in mehreren Stufen unter indirekter Beheizung in Apparaturen aus oder mindestens beschichtet mit Email. Unter Email werden glasartige Überzüge, die säurefest sind und einer Temperaturwechselbeanspruchung standhalten, verstanden.

Aus der FR-A-1 241 856 ist ein Verfahren zur Aufkonzentrierung von Schwefelsäure bekannt, bei welchem schliesslich bei dem sehr niedrigen Druck von 1,3 × 10³ Pa 85%ige Schwefelsäure auf eine Konzentration von 96% gebracht wird. Dabei wird die kondensierte Wassermenge wieder in einer Vorkonzentrierungsstufe auskondensiert, was in erster Linie die Unwirtschaftlichkeit dieses Verfahrens bedingt.

Aus der DE-C-1 074 019 ist die Denitrierung und gleichzeitige Reinigung von 75%iger Schwefelsäure bekannt. Durch Zugabe von Salpetersäure werden organische Verunreinigungen abgebaut, die zugegebenen Stickstoffverbindungen bis zum N0 reduziert.

Die Aufgabe der vorliegenden Erfindung ist es, ein Verfahren zur Regenerierung von Schwefelsäure zur Verfügung zu stellen, das wirtschaftlich durchzuführen ist und eine sehr reine Schwefelsäure liefert.

Gegenstand der vorliegenden Erfindung ist ein Verfahren zum Regenerieren von verunreinigter Schwefelsäure unter indirekter Beheizung in Apparaturen beschichtet mit Email, welches dadurch gekennzeichnet ist, dass die Säure zunächst in einer indirekt beheizten, einstufig, gegebenenfalls auch mehrstufig ausgebildeten Vorkonzentriereinheit auf eine Austrittskonzentration von 60 bis 80 Gew.-% Schwefelsäure aufkonzentriert, anschliessend in eine Hochkonzentriereinheit geleitet und dort bei Temperaturen zwischen ca. 160 °C bis 250 °C und einem Druck zwischen ca. 4 bis 13,3 × 10³ Pa bis zu einer Konzentration von 90 Gew.-% bis 98,3 Gew.-% Schwefelsäure aufkonzentriert und anschliessend einer Reinigungsstufe zugeführt, in der eine Temperatur zwischen ca. 220 °C und 330 °C aufrechterhalten und die Säure unter Atmosphärendruck oder vermindertem Druck gereinigt wird, wobei die Emailschicht unter allen Betriebsbedingungen noch eine Restdruckspannung von mindestens 10% aufweist.

Die vorliegende Erfindung betrifft ferner eine Vorrichtung zur Durchführung des Verfahrens. Die erfindungsgemässe Vorrichtung ist dadurch gekennzeichnet, dass zum Erhitzen der Säure in der Vorkonzentriereinheit wärmeträgerbeheizte Wärmetauscher (15) aus emaillierten Doppelmantelrohren vorgesehen sind und die erste Vorkonzentrierstufe (A) einen, durch einen metallischen Werkstoff, z.B. ein Tantalröhrenbündel, gebildeten Wärmeaustauscher (5) mit nachgeschaltetem Ausdampfbehälter (6), eine nachgeordnete zweite Vorkonzentrierstufe (B) einen, z.B. durch Email-Doppelmantelrohre aus Stahl gebildeten Wärmetauscher (15) mit nachgeordnetem Ausdampfbehälter (16) und die den Vorkonzentrierstufen (A, B) nachgeordnete Hochkonzentrierstufe (C) einen durch Email-Doppelmantelrohre aus Stahl gebildeten Wärmetauscher (24) mit nachgeordnetem Ausdampfbehälter (25) und die nachgeordnete Reinigungsstufe (D) ein strahlungsbeheiztes Quarzglasrohr (36), eine Aufheizzone (38) zur Erhitzung der Säure, eine nachgeordnete Reaktionszone (39) und eine nachgeordnete Nachreaktionszone (46) aufweist.

Es hat sich gezeigt, dass mit emailbeschichteten Anlagen die Einhaltung der genannten hohen Temperaturen und damit das Konzentrieren der Säure bis zum azeotropen Punkt möglich ist. In einem zusätzlichen Schritt wird in einer separaten, z.B. aus Quarz bestehenden oder emailbeschichteten Apparatur eine vollständige Reinigung der Säure durchgeführt; und zwar durch Erhitzen der konzentrierten Säure auf 290 bis 350 °C unter Einhaltung bestimmter Verweilzeiten bei vermindertem oder Atmosphärendruck, erforderlichenfalls unter Zugabe eines Oxidationsmittels, vorzugsweise Salpetersäure.

Emailbeschichtungen werden bei hoher Temperatur auf Stahl aufgebracht. Infolge der verschiedenen Wärmeausdehnungskoeffizienten von Stahl- und Emailschicht entsteht beim Abkühlen in der Emailschicht eine Druckspannung, welche erwünscht und zur Verhinderung von Rissen in der Emailschicht notwendig ist. Bei einer Raumtemperatur von 25 °C beträgt die dieser Druckspannung entsprechende Stauchung der Emailschicht etwa 0,0015 m/1m. Mit sinkender Temperatur nimmt die Druckspannung zu, mit steigender Temperatur entsprechend ab, so dass sie üblicherweise bei einer mittleren Temperatur von ca. 400 °C 0 wird. Würde man also davon ausgehen, dass immer eine Druckspannung in der Emailschicht vorhanden sein muss, so wäre unter idealen Bedingungen die Verwendung von emaillierten Teilen bis zu einer Temperatur von ca. 400 °C möglich. Unter den normalen Einsatzbedingungen führen jedoch verschiedene Faktoren bei den bekannten Verdampfervorrichtungen dazu, dass bereits bei niedrigen mittleren Temperaturen die Druckspannung 0 oder sogar negativ wird, was fast zwangsläufig zu den gefürchteten Haarrissen führt. Zu diesen Faktoren gehört u.a. die Übertragung von Wärme von der Stahlseite her durch die Emailschicht auf ein zu behandelndes Medium. Infolge des bekannten Temperaturverlaufs beim Übertragen von Wärme hat die Emailschicht eine geringere mittlere Temperatur als die Stahlschicht, wodurch die Druckspannungen in der Emailschicht im Vergleich zum stationären Zustand vermindert wird. Diese Erscheinung wird noch weiter negativ beeinflusst durch ungleichmässige Erwärmung oder Abkühlung der emailbeschichteten Wand, z.B. dadurch, dass die Wärmezufuhr von der Stahlseite her ungleichmässig ist, oder dadurch, dass die Kühlung auf der Seite

der Emailschicht infolge Verkrustungen dieser Schicht oder infolge ungleichmässiger Strömung des zu erwärmenden Mediums oder dessen teilweiser Verdampfung ungleichmässig erfolgt. Erfindungsgemäss werden deshalb die Emailschichten so eingesetzt, dass in ihnen noch eine restliche Druckspannung vorhanden ist. Diese erfindungsgemässe Restspannung verhindert das Entstehen von Haarrissen, so dass die Emailschicht einwandfrei gegen Korrosion durch die heisse, hochkonzentrierte Säure schützt. Die erfindungsgemässe Restdruckspannung bzw. Reststauchung, die unter allen Betriebsbedingungen aufrechtzuerhalten ist, soll unter den jeweiligen Betriebsbedingungen möglichst gross sein, jedoch vorzugsweise nicht kleiner als 0,0003 m/1m. In sehr speziellen Fällen sind auch kleinere Restdruckspannungen zulässig, aber nur, wenn keine Deformation und andere negative Einflüsse auf die Emailschicht zu befürchten sind. In solchen Fällen soll jedoch auch eine Restdruckspannung von ca. 10%, d.h. eine Stauchung von 0,00015 m/1m in der Emailschicht vorhanden sein.

Ein weiterer erfindungsgemässer Punkt ist die gesamte Temperaturführung, wobei die Säure zwangsläufig mit einer solchen vorgegebenen Geschwindigkeit an den emaillierten Wärmetauscherflächen vorbeiströmt, dass keine Feststoffablagerung an diesen Flächen stattfinden kann und gleichzeitig auch so, dass an den Wärmetauscherflächen keine Verdampfung stattfindet, sondern lediglich eine Erhitzung der Säure. Aus diesem Grunde wird erfindungsgemäss ein mehrfaches der zu konzentrierenden Säuremenge in der Apparatur umgewälzt und gleichzeitig dafür gesorgt, dass der statische Druck am Austritt des letzten Wärmetauscherrohres genügend gross ist, um bei der vorgegebenen Säuretemperatur eine Verdampfung zu vermeiden. Diese Temperaturführung muss jedoch im Zusammenhang mit der erfindungsgemässen Restdruckspannung geschehen. Bei Säure- und Wärmeträgergeschwindigkeiten von über ca. 0,8 m/sec, vorzugsweise 0,9 bis 1,5 m/sec, wird die erfindungsgemässe minimale 20%ige Reststauchung von 0,0003 m/1m in der Emailschicht nicht unterschritten. Generell kann die Geschwindigkeit der Säure in den Wärmetauscherrohren in dem Bereich zwischen ca. 0,4 und 4 m/sec variiert werden. Ganz besonders bevorzugt wird jedoch eine Geschwindigkeit von 0,8 bis 1,2 m/sec eingestellt. Bei dieser Geschwindigkeit bleiben evtl. vorhandene Feststoffe in der Suspension.

Obwohl die Hochkonzentrierstufe mit praktisch jeder Säurekonzentration von über 30, vorzugsweise über 40 Gew.-% $H_2SO_4$ Eingangskonzentration betrieben werden kann, ist es speziell bei stark verdünnten Säuren vorteilhaft, eine Voreindampfanlage vorzuschalten, welche bei grosser Ausdampfleistung vorzugsweise mehrstufig bei unterschiedlichen Drücken nach dem Prinzip der Brüdenausnutzung arbeitet. Die letzte Verdampferstufe der Vorkonzentrierung wird ebenfalls mit Wärmeträgern beheizt. Dadurch lassen sich grosse Temperaturgefälle und somit geringe Heizflächen und ein wirtschaftlicher Betrieb erreichen. Durch geeignete Wahl der Verfahrensstufen, der Beheizungsart sowie der konstruktiven Ausgestaltung der erfindungsgemässen Vorrichtung unter den speziellen, erfindungsgemässen Bedingungen können Email-Werkstoffe erstmals so genutzt werden, dass es möglich wird, in der letzten Stufe der Vorkonzentriereinheit und in der Hochkonzentriereinheit auf metallische Werkstoffe, welche nur eine beschränkte Korrosionsbeständigkeit aufweisen, gänzlich zu verzichten. Gleichzeitig werden unter den erfindungsgemässen Bedingungen auch die Voraussetzungen geschaffen, genügend hohe Temperaturdifferenzen zwischen den einzelnen Verdampferstufen zu schaffen, um die Brüdenwärme wirtschaftlich ausnutzen zu können.

Als Verdampfer hat sich besonders der Umlaufentspannungsverdampfer bewährt, bei welchem im Wärmetauscher selbst nur eine Aufwärmung der Säure in der Flüssigkeitsphase vorgenommen wird, und die Ausdampfung erst im Ausdampfbehälter geschieht. Dies ist besonders wichtig, wenn die zu konzentrierenden Säuren Verunreinigungen enthalten, welche dazu neigen, an den Verdampfungsflächen auszukristallisieren. Dies trifft z.B. für eisenhaltige Säuren zu. Die Löslichkeit von Eisensulfat in Schwefelsäure nimmt im Bereich über 90 Gew.-% $H_2SO_4$ rasch ab und es besteht die Gefahr, dass sich Eisensulfat an den Verdampfungsflächen festsetzt. Diese Gefahr besteht im Umlaufentspannungsverdampfer nicht, weil an den Wärmetauscherflächen keine Verdampfung stattfindet und das ausfallende Eisen so in Suspension bleiben kann. Anstelle von Umlaufentspannungsverdampfern können aber, je nach Qualität der Säure, auch andere Verdampfertypen gewählt werden, z.B. Fallfilmverdampfer, beheizte Ausdampfbehälter usw.

Bei mit organischen Bestandteilen verunreinigten Säuren destillieren die Organica, je nachdem, welche Siedetemperatur sie aufweisen, bereits in den verschiedenen Verdampferstufen zumindest teilweise mit den Brüden ab. In vielen Fällen ist aber zumindest ein Restanteil an Organica vorhanden, welcher nicht verdampft und daher bei hohen Temperaturen oxidiert werden muss. Mit dem erfindungsgemässen Verfahren und in der erfindungsgemässen Vorrichtung kann z.B. Trinitrotoluol bei 320°C unter Zugabe von Salpetersäure als Oxidationsmittel vollständig abgebaut werden. Auch niedrigere Reaktionstemperaturen können eingehalten werden. Bei Säuren, die wieder für den gleichen Verwendungszweck eingesetzt werden, können z.B. auch geringere Reaktions- und damit Aufarbeitungsgrade in Kauf genommen werden, da die Verunreinigungen den vorhergehenden Prozess nicht stören.

Es ist z.B. bekannt, die Oxidationsreaktion mit Salpetersäure in einem Verweilzeitbehälter aus Gusseisen vorzunehmen. Als besonders vorteilhaft hat sich jedoch ein Rohrreaktor aus Quarz oder gegebenenfalls Email erwiesen, in welchem die Säure zunächst in der Aufheizzone durch indirekte Wärmezufuhr, z.B. durch Strahlungsheizung, auf Reaktions- und Oxidationstemperatur gebracht wird und anschliessend in die Reaktionszone gelangt, wo die Säure im Gegenstrom mit einem Oxidationsmittel, vorzugsweise Salpetersäure, in Berührung gebracht wird, wodurch die Organica oxidiert werden. Die dabei teilweise entstehende Nitrosyl-Schwefelsäure ($HNOSO_4$) reagiert in der nachgeschalteten Nachreaktionszone mit den restlichen vorhandenen Organica, so dass am Ende der Reinigungsstufe eine sehr reine Säure abgezogen werden kann.

Die Nachreaktionszone ist mit der Reaktionszone direkt verbunden. In der Reinigungsstufe D, und zwar in der Reaktionszone, kann die Konzentration der die Hochkonzentriereinheit verlassenden Säure im geringen Umfang erniedrigt, erhöht oder konstant gehalten werden.

Bei Zusatz von Salpetersäure zur Oxidation der organischen Bestandteile wird Wasser in die bereits hochkonzentrierte Säure eingebracht. Desgleichen entsteht Wasser in geringen Anteilen bei der Oxidation der organischen Bestandteile. Durch diese geringe Wasserzufuhr kann die bereits hochkonzentrierte Säure in ihrer Konzentration erniedrigt werden. Bei mit bis zu 2–3 Gew.-% Organica verunreinigten Säuren wird der Konzentrationsabfall ca. 2–3 Gew.-% betragen, in Ausnahmefällen kann er auch höher sein, z.B. 5–6 Gew.-%.

Die erfindungsgemäss bevorzugte Ausführungsform besteht darin, diesen eingebrachten Wasseranteil durch weitere Wärmezufuhr in der Reaktionszone wieder zu entfernen, d.h. die Säure mit der in der Hochkonzentriereinheit gewonnenen Konzentration nach der Nachreaktionszone abzuziehen.

Eine weitere Möglichkeit besteht darin, eine weitere Hochkonzentrierung in der Reaktionszone vorzunehmen. Mit dieser Betriebsweise wird eine sehr reine und gleichzeitig hochkonzentrierte Säure erhalten. Diese Fahrweise dürfte jedoch unter wirtschaftlichen Gesichtspunkten in den meisten Fällen eher von untergeordneter Bedeutung sein.

In der Zeichnung ist die Aufheizzone und die anschliessende Reaktionsstrecke sowie die Nachreaktionszone in demselben Apparat untergebracht. Dies ist die erfindungsgemäss bevorzugte Ausführungsform.

Dies muss jedoch nicht zwangsweise der Fall sein. Eine Verfahrens- und Vorrichtungsvariante besteht z.B. darin, dass die Reaktionszone und Aufheizzone aus getrennten Apparaten bestehen.

Wie bereits vorstehend ausgeführt, besteht die Vorkonzentriereinheit aus einer, üblicherweise jedoch mindestens zwei hintereinandergeschalteten einzelnen Stufen, die bei unterschiedlichen Drücken betrieben werden. Je nach Konzentration und Zusammensetzung der aufzuarbeitenden Säuren wird die Vorkonzentriereinheit 1- bis 3stufig und nur in Spezialfällen gegebenenfalls auch in noch mehreren Stufen ausgebildet. Ist die Vorkonzentriereinheit in ihrer bevorzugten Ausführungsform mehrstufig ausgebildet, so werden in der gesamten Vorkonzentriereinheit die Brüden so geführt, dass die Brüden aus der jeweils bei höherem Druck arbeitenden Verdampferstufe zur Beheizung der bei niedrigerem Druck arbeitenden säureseitig gesehen vorhergehenden Stufen ausgenutzt werden.

Es hat sich von Vorteil erwiesen, bei einer dreistufig ausgebildeten Vorkonzentriereinheit in den verschiedenen Stufen erfindungsgemäss die folgenden Bereiche einzustellen:

1. Stufe
Konzentration der aufzuarbeitenden Säuren: 15 bis 35 Gew.-% $H_2SO_4$;
Konzentration der austretenden Säure: 20 bis 42 Gew.-% $H_2SO_4$;
Temperaturbereich: 30 bis 65 °C;
Druckbereich: 4–13,3 × $10^3$ Pa.

2. Stufe
Konzentration der aufzuarbeitenden Säuren: 20 bis 42 Gew.-% $H_2SO_4$;
Konzentration der austretenden Säuren: 28 bis 54 Gew.-%; $H_2SO_4$;
Temperaturbereich: 65 bis 100 °C;
Druckbereich: 20 bis 66 × $10^3$ Pa.

3. Stufe
Konzentration der aufzuarbeitenden Säuren: 28 bis 54 Gew.-% $H_2SO_4$;
Konzentration der austretenden Säuren: 60 bis 80 Gew.-% $H_2SO_4$;
Temperaturbereich: 120 bis 125 °C;
Druckbereich: 66 bis 200 × $10^3$ Pa.

Bei einer zweistufig ausgebildeten Vorkonzentriereinheit werden erfindungsgemäss die folgenden Bedingungen eingestellt:

1. Stufe
Konzentration der aufzuarbeitenden Säuren: 25 bis 50 Gew.-% $H_2SO_4$;
Konzentration der austretenden Säuren: 34 bis 61 Gew.-% $H_2SO_4$;
Temperaturbereich: 40 bis 100 °C;
Druckbereich: 4 bis 26,7 × $10^3$ Pa.

2. Stufe
Konzentration der aufzuarbeitenden Säuren: 34 bis 61 Gew.-% $H_2SO_4$;
Konzentration der austretenden Säuren: 60 bis 80 Gew.-% $H_2SO_4$;
Temperaturbereich: 125 bis 225 °C;
Druckbereich: 66 bis 200 × $10^3$ Pa.

Unter besonderen Umständen, z.B. wenn die Säure schon mit einer genügend hohen Konzentration anfällt, kann gegebenenfalls auf mehrere Stufen der Vorkonzentriereinheit verzichtet werden, so dass diese auch einstufig betrieben werden kann. Für solche Fälle haben sich erfindungsgemäss die folgenden Bedingungen gut bewährt:

Eine Stufe
Konzentration der aufzuarbeitenden Säure: 30 bis 60 Gew.-% $H_2SO_4$;
Konzentration der austretenden Säure: 60 bis 80 Gew.-% $H_2SO_4$;
Temperaturbereich: 60 bis 160 °C;

Druckbereich: 4 bis 26,7 × 10³ Pa.

Eine besonders vorteilhafte Ausführungsform des Verfahrens bzw. der zu seiner Durchführung erforderlichen Vorrichtung ist im folgenden anhand der Zeichnungen beispielsweise beschrieben.

Fig. 1 zeigt das allgemeine Verfahrensschema mit einer zweistufigen Vorkonzentriereinheit und das Schema der Vorrichtung und

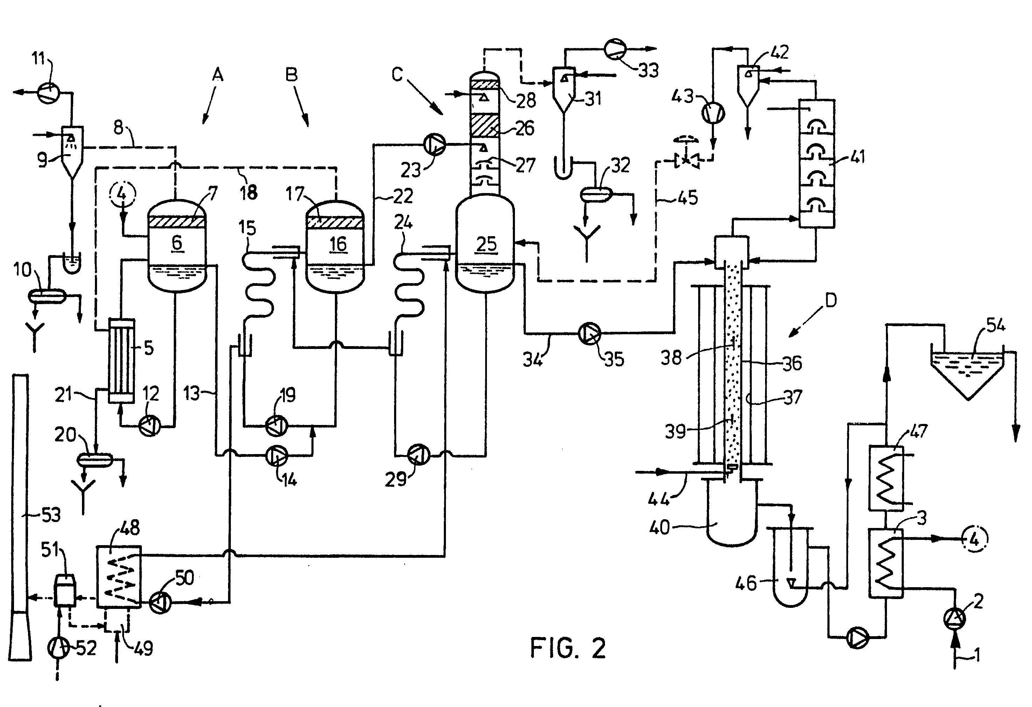

Fig. 2 zeigt das Schema eines Ausführungsbeispiels.

In einer zweistufigen Vorkonzentriereinheit, einer Hochkonzentriereinheit und einer anschliessenden Reinigungsstufe soll 30 gewichtsprozentige, mit Organica verunreinigte Rohschwefelsäure auf eine 98,3%ige $H_2SO_4$ regeneriert werden.

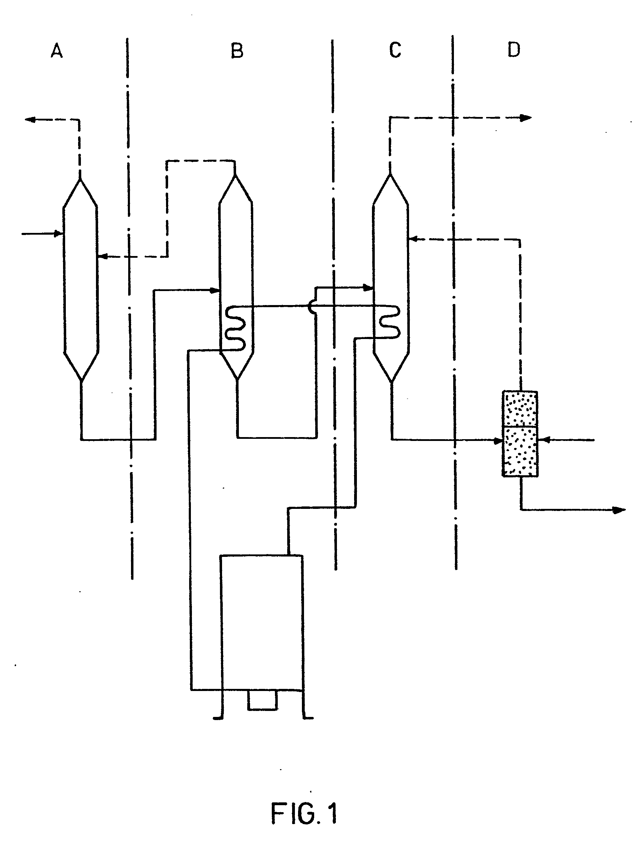

In der Fig. 1 sind mit A und B zwei Stufen der Vorkonzentriereinheit, mit C die Hochkonzentriereinheit und mit D die Reinigungsstufe mit Reaktionszone und Nachreaktionszone bezeichnet.

Mit der Kreiselpumpe 2 wird bei 1 Rohsäure (3333 kg/h, 4000 TOC, [total organic carbon] 30% $H_2SO_4$) dem Wärmetauscher 3 zugeführt, in welchem die Rohsäure durch Wärmeentzug aus der Produktsäure vorgewärmt wird. Die (auf 47 °C) vorgewärmte Dünnsäure wird anschliessend bei 4 in den Umlauf der ersten A-Stufe eingespeist. Die Regulierung des Rohsäureflusses erfolgt über die Konstanthaltung des Niveaus im Ausdampfbehälter 6 der ersten Stufe. Die im Umlauf befindliche Schwefelsäure wird im Wärmetauscher 5 (z.B. Tantalröhrenbündel) erwärmt; ausschliesslich im Ausdampfbehälter 6 wird entsprechend der aufgenommenen Wärmemenge Wasser ausgedampft, wodurch Verkrustungen an den Heizflächen vermieden werden.

Die erste Stufe A wird mit der Kondensationswärme der Brüden (Leitung 18) aus der zweiten Stufe B beheizt.

Stufe A wird unter Vakuum betrieben (6,7 × 10³ Pa, 41,5% $H_2SO_4$, 50 °C). Die praktisch säurefreien Brüden der ersten Stufe A (924 kg/h, 50 °C, 6,7 × 10³ Pa) gelangen über den Tropfenabscheider 7, in welchem mitgerissene Schwefelsäuretropfen zurückgehalten werden, durch die Leitung 8 in einen Mischkondensator 9, wo die Brüden durch Einspritzen von Kühlwasser kondensiert werden. Die mit den Brüden abdestillierten leichten Organica werden im nachgeschalteten Trenngefäss 10 vom übrigen Kondensat soweit wie möglich getrennt.

Die Erzeugung des Vakuums sowie das Absaugen der nicht kondensierten organischen Dämpfe und der Inertgase erfolgt z.B. mit einer Wasserringvakuumpumpe 11.

Als Konstruktionsmaterialien für den Umlauf und den Ausdampfbehälter kommen z.B. glasfaserverstärkter Kunststoff, PVC, Graphit, Glas oder Email in Frage.

Die erste Stufe A kann auch mit einem Fallfilmverdampfer ausgeführt werden, wobei die Schwefelsäure in einem Durchgang aufkonzentriert wird. In beiden Fällen ist der Wärmetauscher 5 aus einem metallischen Werkstoff, hier aus Tantal hergestellt. Anstelle eines metallischen Werkstoffs ist es jedoch auch möglich, Graphit, Glas oder Email einzusetzen.

Die aus der ersten Stufe A ablaufende, vorkonzentrierte Schwefelsäure (2409 kg/h, 50 °C, 41,5% $H_2SO_4$) wird durch die Leitung 13 der Kreiselpumpe 14 in den Umlauf der zweiten Stufe B eingespeist. Die Regulierung der Einspeisemenge erfolgt über die Konstanthaltung des Niveaus im Verdampfer 16 der zweiten Stufe B.

Die durch die Kreiselpumpe 19 umgewälzte Schwefelsäure wird im Wärmeaustauscher 15, bestehend aus hintereinandergeschalteten, emaillierten Doppelmantelrohren, erhitzt, um dann ausschliesslich im Ausdampfbehälter 16 auszudampfen, wodurch Verkrustungen an der emaillierten Holzfläche vermieden werden.

Die Beheizung des Wärmetauschers 15 der zweiten Stufe B erfolgt mit einem Wärmeträgeröl, wobei der Wärmeträger im Mantelraum der emaillierten Doppelmantelrohre im Gegenstrom zur Schwefelsäure geführt wird. Die Konzentration und der Druck im Ausdampfbehälter 16 sind so gewählt, dass die Säurekonzentration in den Brüden ohne zusätzliche Kolonne praktisch auf Null gehalten und die Kondensationswärme der Brüden in der ersten Stufe A ausgenützt werden kann (75% $H_2SO_4$, 1 bar, 185 °C).

Die im Ausdampfbehälter 16 entstehenden Brüden (1076 kg/h, 1 bar, 100 °C) gelangen über den Tropfenabscheider 17, in welchem mitgerissene Schwefelsäuretropfen zurückgehalten werden, durch Leitung 18 in den Wärmetauscher 5 der ersten Stufe A, wo sie kondensiert werden; das entstehende Kondensat wird bei 21 (1076 kg/h, 1 bar, 95 °C) schliesslich in das Trenngefäss 20 geführt.

In diesem Trenngefäss können die mit den Brüden abdestillierten (z.B. alle mit tieferem Siedepunkt als 185 °C) und im Wärmetauscher 5 kondensierten oder kristallisierten Organica vom Kondensat getrennt werden. Die Inertgase werden über das Abgassystem abgeleitet.

Die aus der zweiten Stufe B ablaufende Zwischenproduktsäure wird durch die Leitung 22 mit der Kreiselpumpe 23 der Rektifizierkolonne 26 der Hochkonzentrierstufe C zugeführt. Die Pumpe 23 kann bei geeigneter Anordnung der zweiten und dritten Stufe A, B entfallen. Die Regulierung der Einspeisemenge (1333 kg/h, 185 °C, 75% $H_2SO_4$) erfolgt über die Konstanthaltung des Niveaus im Ausdampfbehälter 25 der Hochkonzentrierstufe C.

In der Abtriebssäule 27 erfährt die Flüssigkeit mit den aus dem Umlaufverdampfer 25 heraufströmenden Brüden einen Stoffaustausch, wobei sich die Flüssigkeit mit schwersiedenden Bestandteilen und der Dampf mit leichtersiedenden Bestandteilen anreichert. Bei richtiger Wahl der Zwischenproduktkonzentration (75% $H_2SO_4$) bewirkt der Stoff- und Wärmeaustausch eine vollständige Absorption des $H_2SO_4$-Bestandteiles in den Brüden. Wird die Endkonzentration der zweiten Stufe B zu hoch gewählt (z.B. grösser als 75% $H_2SO_4$), muss die Rektifizierkolonne der Stufe C mit einer Verstärkerkolonne erweitert werden, welche mit Wasser beaufschlagt werden muss.

Die durch die Kreiselpumpe 29 umgewälzte Schwefelsäure wird im Wärmetauscher 24, bestehend aus hintereinandergeschalteten emaillierten Doppelmantelrohren, erhitzt, um dann ausschliesslich im Ausdampfbehälter 25 auszudampfen, wodurch Verkrustungen an der emaillierten Heizfläche vermieden werden. Die Beheizung des Wärmeaustauschers 24 erfolgt mit einem Wärmeträgeröl, wobei der Wärmeträger im Mantelraum der emaillierten Doppelmantelrohre im Gegenstrom zur Schwefelsäure geführt wird.

Es wurde überraschenderweise gefunden, dass emaillierter Stahl gegenüber Schwefelsäure, speziell gegenüber sehr hoch konzentrierter Schwefelsäure (98,3%) unter den erfindungsgemässen Bedingungen chemisch sehr beständig ist. Dies ist um so überraschender, da bekannt ist, dass bei Email bei höheren Temperaturen Haarrisse auftreten, es ist daher unumgänglich, unter den speziellen erfindungsgemässen Bedingungen zu arbeiten. Hingegen dürfen bestimmte Temperaturen oder Temperatur-Differenzen nicht unter- oder überschritten werden. Aus diesem Grund hat sich als zweckmässig erwiesen, die Hochkonzentrierstufe C unter Unterdruck zu fahren. Als betriebssicher hat sich folgender Zustand erwiesen: Vakuum im Verdampferkörper (25) 4 bis 13,3 × $10^3$ Pa, vorzugsweise 6,7 bis 9,3 × $10^3$ Pa, Temperatur 160 bis 250°C, Siedetemperatur der 98,3%igen Säure 240°C, Wärmeträgertemperatur am Ende des Wärmetauschers (24) 310°C, Säuretemperatur an dieser Stelle 260°C, Wärmeträgertemperatur am Eintritt des Wärmetauschers (24) 290°C und Säuretemperatur an dieser Stelle 240°C. Die im Ausdampfbehälter 25 entstehenden Brüden weisen, je nach Endkonzentration, einen verschieden hohen Säuregehalt auf. Diese Säure wird in der Rektifizierkolonne 26 durch Stoffaustausch mit der zufliessenden Schwefelsäure ausgetauscht.

Die Brüden der Stufe C mit einem Säuregehalt entsprechend dem Gleichgewicht der aufgegebenen Säure, gelangen über den Tropfenabscheider 28, in welchem mitgerissene Schwefelsäuretropfen zurückgehalten werden, durch die Leitung 30 in einen Mischkondensator 31, wo die Brüden (313 kg/h, 6,7 × $10^3$ Pa, 185°C) durch Einspritzen von Wasser kondensiert werden. Die mit den Brüden abdestillierten (z.B. alle mit einem Siedepunkt unter 240°C) und im Mischkondensator 31 kondensierten oder kristallisierten Organica werden im nachgeschalteten Trenngefäss 32 vom übrigen Kondensat soweit wie möglich getrennt. Die Erzeugung des Vakuums sowie das Absaugen der nicht kondensierten organischen Dämpfe, die Abgase der oxidierten Organica und der sonstigen Inertgase, erfolgt mit der Wasserringvakuumpumpe 33.

Bei mit organischen Stoffen verunreinigter Säure findet üblicherweise eine Reaktion zwischen den Organica und dem im Ausdampfbehälter befindlichen $SO_3$-Gas statt. Um die Reduktion des $SO_3$ zu $SO_2$ und die unerwünschte schweflige Säure $H_2SO_3$ im Kondensat zu vermeiden, wird ein Oxidationsmittel, vorzugsweise $HNO_3$, zugegeben.

Bei eisenhaltigen Säuren wird im allgemeinen in der Hochkonzentrierstufe C der Sättigungszustand (bei 98,3% $H_2SO_4$ und 240°C ca. 20 ppm Fe) überschritten, was ein Ausscheiden von Eisen-(II)-sulfat zur Folge hat. Wegen der ständigen Zirkulation der Schwefelsäure im Umlauf bleibt das Eisensulfat in Suspension und hat keine Gelegenheit, sich im Verdampfer abzusetzen.

Um den Abrieb des Emails durch ausgeschiedene Eisensulfate zu verhindern, kann die Umlaufgeschwindigkeit in den Doppelmantelrohren sowie in den Umlaufleitungen auf 1 m/s limitiert werden.

Die Hochkonzentrierstufe wird vorzugsweise in emailliertem Stahl ausgeführt, wobei für die Rektifizierkolonne auch Glas als alternativer Wirkstoff möglich ist. Die Umwälzpumpe kann auch aus anderem Material als emailliertem Stahl ausgeführt werden, vorzugsweise in Siliciumguss.

Die von der Hochkonzentrierstufe C ablaufende, hochkonzentrierte, jedoch nur teilgereinigte Schwefelsäure (1020 kg/h, 98% $H_2SO_4$, 240°C, 2000 ppm TOC = total organic carbon) wird über die Leitung 34 mittels der Dosierpumpe 35 dem mit Säure gefüllten oder berieselten, stehenden Quarzglasrohr 36 zugeführt. In diesem Quarzrohr wird die konzentrierte Schwefelsäure unter Normaldruck nahe an den Siedepunkt aufgewärmt (z.B. von 240°C auf 320°C).

Eine Ausführungsvariante besteht darin, am Rohreintritt (Quarzglasrohr 36 oben) sowie in einer möglichen Rektifizierkolonne 41 unter vermindertem Druck zu fahren. Bei richtiger Wahl des Unterdruckes herrscht in der Reinigungszone infolge der Flüssigkeitssäule im Quarzrohr 36 Normaldruck. Eine weitere Möglichkeit besteht darin, im oberen Teil der Aufheizzone 38, zwecks Erhöhung des Wärmedurchganges, die Schwefelsäure als Fallfilm aufzugeben.

Die Wärmeübertragung erfolgt durch Wärmestrahlung, d.h. das Quarzrohr 36 ist von einem konzentrischen Strahlungsmantel und dieser wiederum von einer elektrischen Widerstandsheizung 37 (oder gegebenenfalls einer anderen Wärmequelle, z.B. Rauchgasen) umgeben. Die Wärmeenergie wird durch Strahlung von der Heizung auf das Strahlungsrohr übertragen und von diesem wird die nach innen emittierte Wärmestrahlung vom Quarz und von der Säure absorbiert.

In der Aufheizzone 38 kann bei Bedarf eine nicht bis zum azeotropen Punkt konzentrierte Schwefelsäure (z.B. 90 bis 97 Gew.-% $H_2SO_4$) bis 98 Gew.-% oder 98,3 Gew.-% konzentriert werden. Bei starker Brüdenentwicklung empfiehlt es sich, die unter einer Flüssigkeitssäule stehende Aufheiz-, und in diesem Fall Konzentrierzone mit Einbauten zu versehen, am zweckmässigsten mit Füllkörpern.

Die beim Konzentrieren in der Aufheizzone 38 entstehenden Brüden weisen je nach Eingangskonzentration, Druck und Temperatur der Säure einen verschieden hohen Säuregehalt auf. Diese Säure muss in einer Rektifizierkolonne 41 durch

Stoffaustausch mit einer aufzugebenden Flüssigkeit ausgetauscht werden. Als Aufgabeflüssigkeit kann Wasser verwendet werden, wobei das mit Schwefelsäure angereicherte ablaufende Waschwasser in die Reinigungsstufe zurückgeführt oder auch in die Hochkonzentrierstufe zusammen mit der Dünnsäure eingespeist werden kann. Als Aufgabeflüssigkeit kann auch die Dünnsäure eingesetzt werden (wenn die Konzentration unter 75 Gew.-% $H_2SO_4$ liegt).

Die beim Konzentrieren entstehenden Brüden gelangen über die Rektifizierkolonne 41, in welcher der erwähnte Stoffaustausch stattfindet, in einen Kondensator 42. Die Erzeugung des Vakuums sowie das Absaugen der nicht kondensierten organischen Dämpfe, die Abgase der oxidierten Organica und der sonstigen Inertgase, erfolgt mit der Vakuumpumpe 43. Die vorgewärmte, konzentrierte, jedoch noch ungereinigte Schwefelsäure (1020 kg/h, 97 Gew.-% $H_2SO_4$, 320 °C) fliesst von der Aufwärmzone 38 in die Reaktionszone 39.

Die Reaktionszone, bestehend aus dem Unterteil des Quarzrohres 36, ist von einem konzentrischen Strahlungsmantel und dieser wiederum von einer elektrischen Widerstandsheizung 37 (oder gegebenenfalls einer anderen Wärmequelle, z.B. Rauchgase) umgeben. Die Wärmeenergie wird durch Strahlung von der Heizung auf das Strahlungsrohr übertragen und von diesem wird die nach innen emittierte Wärmestrahlung vom Quarz und von der Säure absorbiert.

In dem unteren Teil des Quarzrohres 36 findet die Oxidation der Organica mittels eines bei 44 zugegebenen Oxidationsmittels (z.B. 65%ige Salpetersäure), welches dampfförmig im unteren Teil der Reinigungssäule z.B. über eine Lochplatte zur Erzeugung von kleinen gleichmässig verteilten Dampfbläschen eingeführt wird, statt. Bei sehr stark verschmutzten Schwefelsäuren empfiehlt es sich, die Reaktionszone 39 mit Einbauten zu versehen, am zweckmässigsten mit Füllkörpern. Bei Bedarf können die Einbauten über das ganze Quarzrohr ausgeweitet werden. Durch die Zugabe von Salpetersäure kann sich teilweise auch das in der Produktsäure unerwünschte Nitrosylhydrogensulfat bilden. Dieses wird in einem Nachreaktor 40 durch Reaktion mit den Organica teilweise wieder abgebaut.

Das Hintereinanderschalten von Aufheizzone und möglicher Konzentrationszone mit der Reinigungszone hat sich als Vorteil erwiesen. Die beim Konzentrieren im unteren Teil der Aufheizzone 38 entstehenden $SO_3$-Gase werden im oberen Teil des Quarzglasrohres 36 von der kälteren Säure wieder absorbiert. Die von der Reaktionszone aufsteigenden nicht reduzierten $NO_x$-Gase können in der Aufheizzone weiter mit den Organica reagieren. Eine strikte Trennung zwischen Aufheiz- und Reaktionszone wird erfindungsgemäss nicht gemacht.

Die aus der Reinigungsstufe D austretenden nicht vollständig reduzierten $NO_3$-Gase sowie die Reaktionsgase können über ein Druckreduzierventil in der Leitung 45 in den Ausdampfbehälter 25 der Hochkonzentrierstufe C geleitet werden, wo

das überschüssige $NO_x$-Gas mit den Organica reagieren kann und gleichzeitig die möglichen $SO_3$-Reduktion zumindest teilweise verhindert.

Die aus dem Nachreaktor 40 austretende heisse konzentrierte Schwefelsäure (320 °C, 98,3% $H_2SO_4$) wird in einem neben dem Nachreaktor aufgebauten Mischkühler 46 mittels Sekundärkreislaufsäure gleicher Konzentration und Reinheit gekühlt. Vor der Einspeisung in den Mischkühler 46 wird die Sekundärkreislaufsäure in einem Wärmeaustauscher 3 durch die Rohsäure sowie durch einen nachgeschalteten wassergekühlten Wärmeaustauscher 47 gekühlt. Die Produktsäure wird dem Sekundärkreislauf entnommen, und, wenn notwendig, in einen Plattenabscheider 54 geleitet, wo das in Suspension befindliche Eisensulfat abgeschieden wird.

In der Reinigungsstufe D besitzt die Schwefelsäure eine Eingangskonzentration von 90 bis 98 Gew.-%, eine Ausgangskonzentration von 90 bis 98,3 Gew.-% und eine Temperatur zwischen 225 und 330 °C.

Die Beheizung der Wärmetauscher 15 und 24 der zweiten und dritten Stufe B, C erfolgt mittels eines zentralen Heizungssystems, bestehend aus einem Hochtemperatur-Erhitzer 48, einem Brenner 49, einer Umwälzpumpe 50, einem Luftvorwärmer 51, einem Verbrennungsluftventilator 52 und dem Kamin 53. Dieses Heizsystem hat gegenüber Rauchgasbeheizung den Vorteil, dass auch schwefelhaltiges Schweröl als Brennstoff verwendet werden kann. Die beiden Wärmeaustauscher 15 und 24 können wärmeträgerseitig in Serie oder parallel geschaltet sein.

Es besteht auch die Möglichkeit, die im Abgas enthaltenen $NO_x$-Gase in einem speziellen Brenner 49 in unterstöchiometrischer Atmosphäre zu reduzieren.

Das beschriebene, mit der dargestellten Einrichtung durchgeführte Verfahren liefert somit bis zum azeotropen Punkt konzentrierte, einwandfrei gereinigte Schwefelsäure.

**Patentansprüche**

1. Verfahren zum Regenerieren von verunreinigter Schwefelsäure unter indirekter Beheizung in Apparaturen, beschichtet mit Email, dadurch gekennzeichnet, dass die Säure zunächst in einer indirekt beheizten, einstufig, gegebenenfalls auch mehrstufig ausgebildeten Vorkonzentriereinheit auf eine Austrittskonzentration zwischen 60 bis 80 Gew.-% $H_2SO_4$ aufkonzentriert, anschliessend in eine Hochkonzentriereinheit geleitet und dort bei Temperaturen zwischen 160 °C und 250 °C und einem Druck zwischen 4 bis 13,3 $\times$ 10³ Pa bis zu einer Konzentration von 90 Gew.-% bis 98,3 Gew.-% $H_2SO_4$ aufkonzentriert und anschliessend einer Reinigungsstufe zugeführt, in der eine Temperatur zwischen 220 °C und 350 °C aufrechterhalten und die Säure unter Atmosphärendruck oder vermindertem Druck gereinigt wird, wobei die Emailschicht unter allen Betriebsbedingungen noch eine Restdruckspannung von mindestens 10% aufweist.

2. Verfahren nach Anspruch 1, dadurch gekennzeichnet, dass bei einer dreistufig ausgebildeten Vorkonzentriereinheit die Säure in der ersten Stufe bei Temperaturen zwischen 30 °C und 65 °C, unter einem Druck zwischen 4 bis 13,3 × $10^3$ Pa auf eine Austrittskonzentration zwischen 20 und 42 Gew.-% $H_2SO_4$, in der zweiten Stufe bei Temperaturen zwischen 65 und 100 °C unter einem Druck von 20 bis 66 × $10^3$ Pa auf eine Austrittskonzentration zwischen 28 und 54 Gew.-% $H_2SO_4$ und in der dritten Stufe bei Temperaturen zwischen 125 °C und 225 °C unter einem Druck von 66 bis 200 × $10^3$ Pa auf eine Austrittskonzentration zwischen 60 und 80 Gew.-% $H_2SO_4$ gebracht wird.

3. Verfahren nach Anspruch 1, dadurch gekennzeichnet, dass bei einer zweistufig ausgeführten Vorkonzentriereinheit die Säure in der 1. Stufe bei Temperaturen zwischen 40 und 100 °C unter einem Druck zwischen 4 und 26,7 × $10^3$ Pa auf eine Austrittskonzentration zwischen 34 und 61 Gew.-% $H_2SO_4$ und in der zweiten Stufe bei Temperaturen zwischen 125 bis 225 °C und einem Druck zwischen 66 und 200 × $10^3$ Pa auf eine Austrittskonzentration zwischen 60 und 80 Gew.-% $H_2SO_4$ gebracht wird.

4. Verfahren nach einem oder mehreren der Ansprüche 1 bis 3, dadurch gekennzeichnet, dass bei einer mehrstufig ausgebildeten Vorkonzentriereinheit die einzelnen Stufen bei unterschiedlichen Drücken betrieben werden.

5. Verfahren nach einem oder mehreren der Ansprüche 1 bis 4, dadurch gekennzeichnet, dass bei einer mehrstufig ausgebildeten Vorkonzentriereinheit die Brüden aus der jeweils bei höherem Druck arbeitenden Verdampferstufe zur Beheizung der bei niedrigem Druck arbeitenden Stufe verwendet werden.

6. Verfahren nach einem oder mehreren der Ansprüche 1 bis 5, dadurch gekennzeichnet, dass die mit der konzentrierten Säure vorgewärmte Rohsäure zweistufig auf etwa 75 Gew.-% vorkonzentriert wird, wobei die Brüden der zweiten bei Atmosphärendruck betriebenen Stufe zum Beheizen der ersten, unter Vakuum betriebenen Stufe dienen, während die zweite Vorkonzentrierstufe die anschliessende Hochkonzentriereinheit durch einen Wärmeträgerkreislauf beheizt werden.

7. Verfahren nach einem oder mehreren der Ansprüche 1 bis 6, dadurch gekennzeichnet, dass die Hochkonzentriereinheit unter solchen Bedingungen betrieben wird, dass die Säure auf über 96% aufkonzentriert wird, bevor sie in die Reinigungsstufe gelangt.

8. Vorrichtung zur Durchführung des Verfahrens nach einem oder mehreren der Ansprüche 1 bis 6, dadurch gekennzeichnet, dass zum Erhitzen der Säure in der Vorkonzentriereinheit wärmeträgerbeheizte Wärmetauscher (15, 24) aus emaillierten Doppelmantelrohren vorgesehen sind und die erste Vorkonzentrierstufe (A) einen z.B. durch ein Tantalröhrenbündel gebildeten Wärmetauscher (5) mit nachgeschaltetem Ausdampfbehälter (6), eine nachgeordnete zweite Vorkonzentrierstufe (B) einen durch Email-Doppelmantelrohre aus Stahl gebildeten Wärmetauscher (15) mit nachgeordnetem Ausdampfbehälter (16) und die den Vorkonzentrierstufen (A, B) nachgeordnete Endkonzentrierstufe (C) einen durch Email-Doppelmantelrohre aus Stahl gebildeten Wärmetauscher (24) mit nachgeordnetem Ausdampfbehälter (25) und die nachgeordnete Reinigungsstufe (D) ein strahlungsbeheiztes Quarzglasrohr (36), eine Aufheizzone (38) zur Erhitzung der Säure, eine nachgeordnete Reaktionszone (39) und eine nachgeordnete Nachreaktionszone (40) aufweist.

9. Vorrichtung nach Anspruch 8, enthaltend in der Reinigungszone eine Vorrichtung, über die ein Oxidationsmittel in Form von kleinen Tropfen bzw. Bläschen der Hochkonzentrierstufe in Gegenstrom zu der in ihr enthaltenen Flüssigkeit zugeführt werden kann.

**Claims**

1. Process for regenerating contaminated sulphuric acid using indirect heating in apparatuses coated with enamel, characterised in that the acid is first concentrated to an output concentration of between 60 and 80% by weight of $H_2SO_4$ in an indirectly heated single-stage or, optionally, even multistage preconcentration unit, the acid is subsequently introduced into a high concentration unit where it is concentrated to a level of 90% by weight to 98.3% by weight of $H_2SO_4$ at temperatures of between 160 °C and 250 °C and under a pressure of between 4 and 13.3 × $10^3$ Pa and then the acid is delivered to a purification stage in which a temperature of between 220 °C and 350 °C is maintained, and the acid is purified under atmospheric pressure or reduced pressure, the enamel layer still having a residual compressive stress of at least 10% under all working conditions.

2. Process according to Claim 1, characterised in that, where the preconcentration unit has three stages, the acid is adjusted to an output concentration of between 20 and 42% by weight of $H_2SO_4$ in the first stage at temperatures of between 30 °C and 65 °C and under a pressure of between 4 and 13.3 × $10^3$ Pa, to an output concentration of between 28 and 54% by weight of $H_2SO_4$ in the second stage at temperatures of between 65 °C and 100 °C and under a pressure of 20 to 66 × $10^3$ Pa, and to an output concentration of between 60 and 80% by weight of $H_2SO_4$ in the third stage at temperatures of between 125 °C and 225 °C and under a pressure of 66 to 200 × $10^3$ Pa.

3. Process according to Claim 1, characterised in that, where the preconcentration unit has two stages, the acid is adjusted to an output concentration of between 34 and 61% by weight of $H_2SO_4$ in a first stage at temperatures of between 40 and 100 °C and under a pressure of between 4 and 26.7 × $10^3$ Pa, and to an output concentration of between 60 and 80% by weight of $H_2SO_4$ in the second stage at temperatures of between 125 and 225 °C and under a pressure of between 66 and 200 × $10^3$ Pa.

4. Process according to one or more of Claims 1 to 3, characterised in that, where the preconcentration unit is of multistage construction, the individual stages are operated at different pressures.

5. Process according to one or more of Claims 1 to 4, characterised in that, where the preconcentration unit is of multistage construction, the vapours from the particular evaporator stage operating at relatively high pressure are used to heat the stage operating at low pressure.

6. Process according to one or more of Claims 1 to 5, characterised in that the crude acid preheated with the concentrated acid is preconcentrated in two stages to about 75% by weight, the vapours from the second stage operated at atmospheric pressure being used to heat the first stage operated in vacuo, whereas the second preconcentration stage and the following high concentration unit are heated by a heat carrier circuit.

7. Process according to one or more of Claims 1 to 6, characterised in that the high concentration unit is operated under such conditions that the acid is concentrated to above 96% before it enters the purification stage.

8. An apparatus for carrying out the process according to one or more of Claims 1 to 6, characterised in that heat exchangers (15, 24) of enamelled double-jacketed tubes heated by heat carriers are provided for heating the acid in the preconcentration unit and the first preconcentration stage (A) comprises a heat exchanger (5) formed for example by a nest of tantalum tubes and followed by an evaporation vessel (6), a following second preconcentration stage (B) comprises a heat exchanger (15) formed by double-jacketed tubes of enamelled steel and followed by an evaporation vessel (16) and the final concentration stage (C) following the preconcentration stages (A, B) comprises a heat exchanger (24) formed by double-jacketed tubes of enamelled steel and followed by an evaporation vessel (25), and the following purification stage (D) comprises a radiation-heated quartz glass tube (36), a heating zone (38) for heating the acid, a following reaction zone (39) and a following after-reaction zone (40).

9. An apparatus according to Claim 8, comprising in the purification zone a device through which an oxidising agent may be delivered to the high concentration stage in the form of small drops or bubbles in countercurrent to the liquid contained therein.

**Revendications**

1. Procédé pour régénérer de l'acide sulfurique impur avec chauffage indirect dans des appareillages revêtus d'émail, procédé caractérisé en ce que l'on concentre tout d'abord l'acide dans une unité de préconcentration chauffée indirectement, à un seul étage, éventuellement aussi réalisé à plusieurs étages, jusqu'à une concentration d'entrée comprise entre 60 et 80% de $H_2SO_4$, puis l'on achemine l'acide dans une unité de concentration poussée et on l'y concentre, à des températures comprises entre 160 °C et 250 °C et à une pression comprise entre 4 et 13,3 × $10^3$ Pa jusqu'à une concentration de 90% en poids à 98,3% en poids de $H_2SO_4$, puis on l'achemine à un étage d'épuration, dans lequel on maintient une température comprise entre 220 °C et 350 °C et l'on épure l'acide à la pression atmosphérique sous pression réduite, la couche d'émail présentant, dans toutes les conditions de service, encore une contrainte de compression résiduelle d'au moins 10%.

2. Procédé selon la revendication 1, caractérisé en ce que, dans le cas d'une unité de préconcentration à trois étages, l'acide est porté dans le premier étage à des températures comprises entre 30 °C et 65 °C, sous une pression comprise entre 4 et 13,3 × $10^3$ Pa à une concentration de sortie comprise entre 20 et 42% en poids de $H_2SO_4$, dans le second étage à des températures comprises entre 65 et 100 °C sous une pression de 20 à 66 × $10^3$ Pa à une concentration de sortie comprise entre 28 et 54% en poids de $H_2SO_4$ et dans le troisième étage à des températures comprises entre 125 °C et 225 °C sous une pression de 66 à 200 × $10^3$ Pa à une concentration de sortie comprise entre 60 et 80% en poids de $H_2SO_4$.

3. Procédé selon la revendication 1, caractérisé en ce que, dans le cas d'une unité de préconcentration à deux étages, l'acide est porté dans le premier étage à des températures comprises entre 40 et 100 °C sous une pression comprise entre 4 et 26,7 × $10^3$ Pa à une concentration de sortie comprise entre 34 et 61% en poids de $H_2SO_4$, et dans le second étage à des températures comprises entre 125 et 225 °C et sous une pression comprise entre 66 et 200 × $10^3$ Pa à une concentration de sortie comprise entre 60 et 80% en poids de $H_2SO_4$.

4. Procédé selon une ou plusieurs des revendications 1 à 3, caractérisé en ce que, lorsque l'on utilise une unité de préconcentration formée de plusieurs étages, on fait fonctionner les divers étages à des pressions différentes.

5. Procédé selon l'une ou plusieurs des revendications 1 à 4, caractérisé en ce que, en cas d'utilisation d'une unité de préconcentration à plusieurs étages, on utilise les vapeurs de l'étage d'évaporation travaillant chaque fois à une pression plus élevée pour chauffer l'étage fonctionnant à une pression plus faible.

6. Procédé selon l'une ou plusieurs des revendications 1 à 5, caractérisé en ce que l'acide brut, préchauffé à l'aide de l'acide concentré, est préconcentré en deux étages jusqu'à environ 75% en poids, les vapeurs du second étage fonctionnant à la pression atmosphérique servant à chauffer le premier étage fonctionnant sous vide, cependant que le second étage de préconcentration et l'unité subséquente de concentration poussée sont chauffés par un circuit de fluide caloporteur.

7. Procédé selon l'une ou plusieurs des revendications 1 à 6, caractérisé en ce qu'on fait fonctionner l'unité de concentration poussée dans des conditions telles que l'acide est concentré à plus de 96% avant de parvenir à l'étage d'épuration.

8. Dispositif pour la mise en œuvre du procédé selon l'une ou plusieurs des revendications 1 à 6, caractérisé en ce que, pour chauffer l'acide dans l'unité de préconcentration, on prévoit des échangeurs de chaleur (15, 24) formés de tubes émaillés à double paroi, chauffés par un fluide caloporteur et en ce que le premier étage de préconcentration (A) présente un échangeur de chaleur (5) formé par exemple d'un faisceau de tubes en tantale avec à la suite un récipient (6) d'évaporation, un second étage (B) de préconcentration disposé à la suite présente un échangeur de chaleur (15) en acier, formé par des tubes émaillés à double paroi avec un récipient d'évaporation (16) disposé en aval, et l'étage de concentration final (C) placé après les étages (A, B) de préconcentration présente un échangeur de chaleur (24) en acier constitué par des tubes émaillés à double paroi avec un récipient d'évaporation (25) placé à la suite, et l'étage (D) d'épuration subséquent présente un tube (36) en verre quartzeux chauffé par rayonnement, une zone (38) de chauffage destinée à chauffer l'acide, une zone (39) de réaction disposée à la suite et une zone (40) de postréaction placée encore ensuite.

9. Dispositif selon la revendication 8, contenant dans la zone d'épuration un dispositif permettant d'acheminer un agent d'oxydation, sous forme de petites gouttes ou de vésicules, à l'étage de concentration poussée à contre-courant du liquide contenu dans cet étage.

A        B        C        D

FIG. 1

FIG. 2